# EUROPEAN PATENT APPLICATION

(11) **EP 4 851 702 A1**
(43) Date of publication of application: **09.12.2026**
(21) Application number: 25181207.9
(22) Date of filing: 05.06.2025
(51) Int. Cl.: G02F 1/01, G09G 3/20

(54) **A SPATIAL LIGHT MODULATOR AND DETECTOR FOR AN OPTICAL DATA PROCESSING SYSTEM**

(71) Applicant: Olix Computing Limited, St. Albans AL3 4PQ (GB)
(72) Inventor: LUKE, Paul, Oxford, OX2 0HP (GB)
(74) Representative: Mathys & Squire

(57) **Abstract**

A device configured for spatial light modulation and detection of modulated light for an optical data processing system is provided. The device comprises an array of a plurality of pixels, wherein each pixel comprises a material configured to exhibit an electro-absorption effect. Each pixel is configured to modulate incident light and to generate an electrical signal, wherein the electrical signal is generated in response to said incident light and depends on a modulation signal applied to each pixel for said modulation. A set of the plurality of pixels are electrically coupled such that the generated electrical signals from pixels of said set generate a combined signal. The device is configured to output a signal indicative of modulated light for the set of the plurality of pixels, based on the combined signal from the set of pixels and the modulation signals applied to the pixels of said set.

## Description

### Field of the invention

The present disclosure relates to a spatial light modulator and detector for an optical data processing system, said optical data processing system, and methods of spatial light modulation and detection for an optical data processing system.

### Background

A spatial light modulator (SLM) is an optical device that may control light's amplitude, phase, and/or polarization. It plays a crucial role in modern optical systems, including in optical computing.

Optical computing uses light to perform data processing and communication. This approach offers potential advantages compared to conventional electronic computing, including for example higher bandwidth, reduced power consumption, and improved scalability.

Current approaches for optical computing applications rely on directing light onto a spatial light modulator, comprising an array of pixels. The SLM pixels may change their transparency to change the amplitude of incident light at each pixel. Thus, the SLM may modulate the amplitude at each pixel site. The modulated light traversing the SLM (or reflected from the SLM, depending) is then often directed to photodetectors, often using a lens systems. The photodetectors detect the intensity of the light, related to the amplitude of the light. Other applications of SLMs are known.

Electroabsorption modulators (EAMs) are known to exist. They are based on the electroabsorption effect, meaning on the change of the absorption coefficient by an electric field. In bulk semiconductors, the absorption edge moves to lower energies with increasing electric field due to a combination of band-to-band absorption and tunnelling processes (Franz-Keldysh effect). In quantum wells, the transition energy between confined energy levels for electrons and holes is reduced as an electric field is applied in the growth direction (quantum confined Stark effect, QCSE).

### Summary

Aspects of the invention are as set out in the independent claims and optional features are set out in the dependent claims. Aspects of the invention may be provided in conjunction with each other and features of one aspect may be applied to other aspects.

An aspect of the invention relates to a device configured to spatially modulate and detect light for an optical data processing system, such as a spatial light modulator and detector for said optical data processing system. The device comprises a plurality of pixels arranged in an array, wherein each pixel is configured to modulate incident light and comprises a material configured to generate an electrical signal indicative of incident light on the pixel, wherein the electrical signal depends at least in part on a modulation signal applied to each pixel for said modulation. For example, the material may be configured to generate an electrical signal indicative of energy of the incident light on the pixel, such as an electrical signal indicative of power of the incident light, for example indicative of intensity of the incident light.

A set of the plurality of pixels are electrically coupled such that the generated electrical signals from pixels of said set are combined to provide a combined signal. The device is configured to output a signal based on the combined signal.

This may be advantageous for use in an optical processor system to provide a more robust and higher accuracy processing system. In particular, the aforementioned device may be more robust against misalignment, eliminating the need for lenses and separate photodetectors after the spatial light modulator.

The material of each pixel may be configured to exhibit an electro-absorption effect, for example wherein the electrical signal is generated in response to incident light. Responsive to an incident light, the generated electrical signal may be based on the modulation signal applied to each pixel for said modulation.

A material configured to exhibit an electro-absorption effect may be any material in which there is a change in optical absorption with applied voltage and/or electric field, and generation of a concomitant electrical signal in response to incident light. For example, this may include, but is not limited to, a semiconductor comprising the material configured to exhibit an electro-absorption effect. For example, this could include a semiconductor material in which an applied field affects the band structure sufficiently to allow for photon assisted transfer of charge carriers from the valence band to the conduction band. Each pixel may comprise one or more quantum well structures. For example, wherein each pixel is configured to exhibit a quantum-confined Stark effect (QCSE). This may be advantageous to achieve higher modulation efficiencies, and therefore lower applied modulation signal voltages. In some examples, each pixel may comprise an electro-absorption modulator (EAM).

The electrical signal generated by a pixel indicative of incident light may generally have a dependence on an energy of said incident light. For example, light intensity is one such example of the energy of incident light. Alternatively, the electrical signal generated by a pixel indicative of incident light may have a dependence on the phase of said incident light.

The electrical signal generated by a pixel may be indicative of the modulated light output by said pixel. For example, the electrical signal generated by a pixel may be indicative of the product of an energy of incident light and the modulation signal applied to said pixel.

The output signal may comprise a signal indicative of an energy of modulated light output by the device. For example, the output signal may be indicative of an intensity of modulated light. The output signal may be indicative of any parameter of the electric field of said modulated light. The signal indicative of modulated light may comprise other indications of energy of said modulated light, such as the generated electrical signal, for example a generated current.

The output signal may be based on a sum of the electrical signals generated by pixels of the set. For example, the output signal may be indicative of the summed product of an energy of incident light and the modulation signal applied to each pixel for said set of pixels.

Alternatively or in addition, the output signal may comprise a signal indicative of an energy of light incident to pixels of the device. An energy of the incident light at a pixel may be determined based on the electrical signal generated by the pixel, and the modulation signal applied to said pixel.

Each pixel may be configured to modulate incident light via amplitude modulation.

The generated electrical signal may be a generated electrical current. For example, pixels of said set may be electrically coupled such that the generated electrical currents from said pixels of the set are configured to be summed. Said pixels of the set may optionally be electrically coupled in a star-connection topology. In this context, a star-connection topology may comprise circuitry wherein all pixels of a set are electrically coupled to a common element. The term "common element" is intended to mean that all pixels of a set are electrically coupled to the same element. The common element may comprise an ammeter configured to measure the combined electrical current.

The electrical coupling of pixels of the set may be configured to phase-align the generated electrical current from said electrically coupled pixels. For example, the electrical coupling of pixels of the set may be configured to phase-align generated electrical currents from said electrically coupled pixels. This may be advantageous to ensure that electrical signals generated by pixels do not combine to reduce or cancel out electrical signals generated by other pixels within a set. Some ways to address this may include inclusion of an envelope detector, and/or circuity to detect electrical signal power or square of amplitude. Alternatively or in addition, some ways to address this may include electrical couplings between pixels within a set being the same length. Alternatively or in addition, some ways to address this may include providing that incident light hitting the pixels may preferably be synchronous light across the said pixels.

For example, the device may further comprise circuitry configured to determine the magnitude of the generated electrical signal for each pixel, and the set of pixels of the array may be electrically coupled such that the determined magnitude of the generated electrical signals of said pixels are configured to be combined. This may be advantageous to ensure that electrical signals generated by pixels within a set do not combine to reduce or cancel out electrical signals generated by other pixels within said set. For example, the circuitry may be configured to determine the square of the amplitude of the generated electrical signal for each pixel (indicative of e.g. the light intensity), such as the square of current amplitude, and the set of pixels of the array are electrically coupled such that the determined square of the amplitude of the generated electrical signals of said pixels are configured to be combined. Providing circuitry to detect the amplitude squared for each pixel and an integrator may be advantageous to detect the energy at intensity from each pixel and since the value of the amplitude squared is positive, they cannot cancel each other out. The integrator may help to capture the energy even if the signals are out of phase. Other approaches may be used.

The electrical coupling of the set of pixels may further comprise an integrator. The integrator may advantageously enable capture of electrical signals, even if the signals are out of phase.

The generated electrical signal may depend on an energy of said incident light. For example, the generated electrical signal may depend on an intensity of said incident light, and/or a parameter of the electric field of said incident light.

The spatial light modulator and detector device may be operable to compute an energy of the modulated light from the generated electrical signal from a pixel and the modulation signal applied to said pixel. In some examples, the computation may be configured to calculate an energy of the modulated light for a set of pixels, from the combined electrical signal from said set of pixels and the modulation signal applied to each pixel within said set. In some examples, the spatial light modulator and detector device may comprise processing logic configured to calculate an energy of the modulated light for a set of pixels, from the combined electrical signal from said set of pixels and the modulation signal applied to each pixel within said set.

For example, an indication of energy or power of the modulated light, such as the intensity of modulated light, may be obtained from the power of the generated current of said pixels. In some examples, the power or energy of the modulated light may be estimated by integrating the currents or magnitude of the currents for said pixel over a defined time period. However, the skilled person will understand that this is not intended to be limiting and other techniques for determining an energy of the modulated light for a set of pixels may be used, for example, an indication of energy of the modulated light, such as the intensity of modulated light, may be calculated based on the generated current for said pixel by mapping the generated current to an energy of modulated light based on the applied modulation signal, and/or comparison with calibration values, lookup tables, or other reference data for example.

The plurality of pixels may comprise two or more sets of pixels. The device may therefore be configured to output a signal based on the combined generated electrical signal for each of the two or more sets of pixels. The output signal may be indicative of the product of an energy of incident light and the modulation signal applied to each pixel for each of the two or more sets of pixels. In particular, the output signal may be indicative of the product of an energy of incident light, for example representative of a vector, and the modulation signal applied to each pixel within the array, for example representative of a matrix.

Pixels of a set may be located in a common line of the array of the plurality of pixels, such as a common row or column. For example, the plurality of pixels may comprise a plurality of sets of pixels, wherein each set comprises pixels located in a common line of the array. The term "common" in the context of a "common line", "common row" or "common column" is intended to mean that pixels of a set may be located in the same line, row, or column, respectively. The device may therefore be configured to output a signal based on the combined generated electrical signal for each column or row of the array, or a column or row of one or more of the sets of pixels of the array.

The modulation signal applied at the array may be configured to be controlled by a matrix of modulation factors, wherein each value in the matrix corresponds to a pixel in the array.

The light incident on the array of pixels may configured to be controlled by a vector, for example wherein the intensity of light incident on the array is controlled by said vector.

In some examples, the device is configured to compute a vector-matrix multiplication. This may be performed by summing the generated electrical signals for each set of a plurality of set of pixels, wherein each set of pixels comprises pixels in a common row or column of the array.

An optical data processing system may also be provided, comprising the device (referred to as the "spatial light modulator and detector") described above. The system may further comprise optics configured to deliver incident light to the array of the plurality of pixels of the device.

The optics may comprise a vector light input configured to deliver a vector of light to the array of the plurality of pixels of the spatial light modulator and detector device. The vector light input may be configured to deliver the vector of light by controlling energy (such as intensity) of light incident on the array based on said vector.

The device (referred to as the "spatial light modulator and detector") may also be arranged to provide output modulated light to another one or more elements for performance of subsequent optical processing.

Use of a spatial light modulator as a detector in an optical data processing system is also provided. The method of use may comprise determining a multiplication of an indication of incident light and a modulation factor applied to a pixel based on an electrical signal generated by said pixel. The method may, alternatively or in addition, comprise determining a multiplication of an indication of incident light and a matrix of modulation factors applied to an array of pixels based on an electrical signals generated by said pixels within the array.

A method of spatial light modulation and detection for an optical data processing system is also provided. The method comprises applying an electrical modulation signal to each pixel within an array of a plurality of pixels, each pixel at a corresponding spatial location. Each pixel comprises a material configured to exhibit an electro-absorption effect. Each pixel is also configured to modulate incident light and to generate an electrical signal, wherein the generated electrical signal depends on incident light and the electrical modulation signal applied to said pixel.

The method further comprises obtaining a generated electrical signal from each pixel within the array in response to incident light, and determining an indication of modulated light based on the generated electrical signal from each pixel within the array and the electrical modulation signal applied to each said pixel.

In some examples, the method may comprise obtaining a combined electrical signal, wherein the combined electrical signal comprises generated electrical signals from each pixel within a set of pixels within the array in response to incident light. The indication of modulated light is then determined based on the combined electrical signal from the set of pixels within the array and the electrical modulation signal applied to each said pixel.

For example, the method may comprise determining an indication of an energy of modulated incident light, such as intensity, based on the generated electrical signal from each pixel within the array and the electrical modulation signal applied to each said pixel.

Determining the indication of modulated incident light may comprise computing an operation by operating on the generated electrical signal for two or more pixels within the array, based on the spatial location of said two or more pixels. For example, determining the indication of modulated incident light may comprise summing the generated electrical signal from each pixel for a set of pixels within the array to determine an indication of intensity of modulated light incident to the set of pixels.

Embodiments of the claims relate to a device configured to spatially modulate light and detect an indication of said modulated light for an optical data processing system, said optical data processing system, and a method of spatial light modulation and detection for an optical data processing system.

In some examples the functionality of processing logic described herein may be provided by mixed analogue and/or digital processing and/or control functionality. It may comprise any general-purpose processor, which may be configured to perform a method according to any one of those described herein. In some examples , processing logic may comprise digital logic, such as field programmable gate arrays, FPGA, application specific integrated circuits, ASIC, a digital signal processor, DSP, or by any other appropriate hardware. In some examples, one or more memory elements can store data and/or program instructions used to implement the operations described herein. Embodiments of the disclosure provide computer program products such as tangible, nontransitory storage media comprising program instructions operable to program a processor to perform any one or more of the methods described and/or claimed herein and/or to provide data processing apparatus as described and/or claimed herein. Such a controller may comprise an analogue control circuit which provides at least a part of this control functionality. An embodiment provides an analogue control circuit configured to perform any one or more of the methods described herein.

It will be appreciated from the discussion above that the embodiments shown in the Figures are merely examples, and include features which may be generalised, removed or replaced as described herein and as set out in the claims.

### Drawings

Embodiments of the disclosure will now be described, by way of example only, with reference to the accompanying drawings, in which:
Fig. 1 shows a block diagram of an optical processing system according to an embodiment of the invention.
Fig. 2 shows a schematic of an example spatial modulator and detector device according to an embodiment of the invention, for example for use in the optical processing system of Fig. 1.
Fig. 3 illustrates an example method of optical processing according to an embodiment of the invention, for example based on utilising the system of Fig. 1.
Fig. 4 illustrates an example method of computing an operation based on optical processing according to an embodiment of the invention, for example based on utilising the system of Fig. 2.
Fig. 5 shows an example vector matrix multiplication for illustration.
Fig. 6 shows a schematic example of an optical processing system for performing vector matrix multiplication according to an embodiment of the invention.

### Specific description

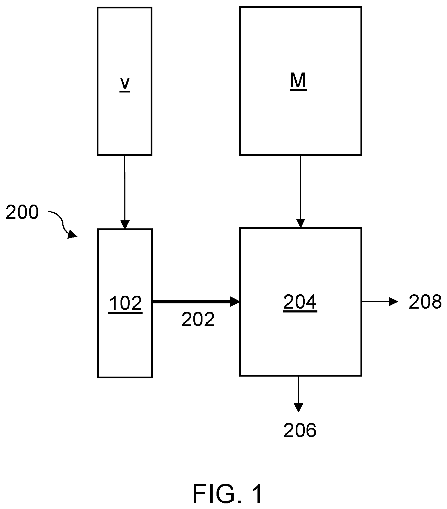

Fig. 1 shows a block diagram of an optical processing system 200 according to an embodiment of the invention.

The system 200 comprises optics 102, and a device 204 configured to spatially modulate and detect light (also referred to as a "spatial light modulator and detector").

The optics 102 is configured to deliver incident light 202 to the spatial light modulator and detector 204. The optics 102 is configured to control the energy of the incident light delivered. The delivered light may be amplitude modulated, for example. In particular, the optics 102 comprises a light vector input array (VIA) configured to deliver a vector v of light to spatial light modulator and detector 204. Vector values may be represented by light intensities or amplitudes or phases output by the optics 102. The optics 102 may comprise one or more lasers, however the skilled person will understand that other light sources may be used.

The spatial light modulator and detector 204 comprises an array of pixels, wherein each pixel comprises a material configured to exhibit an electro-absorption effect. Each pixel is therefore configured to exhibit a change in optical absorption of incident light with an applied voltage, which is in turn used to modulate the incident light. Based on the optical absorption, a proportion of the incident light 208 is reflected and/or transmitted through each pixel of the spatial light modulator and detector 204. The spatial light modulator and detector 204 is therefore configured to spatially modulate light via the array of pixels, each pixel having a corresponding spatial location.

The spatial light modulator and detector 204 is configured to control the optical absorption of each pixel by applying an electrical modulation signal, such as a voltage, to each pixel within the array. The electrical modulation signals applied to the array are configured to be controlled by a matrix M of modulation factors, wherein each value in the matrix M corresponds to a pixel in the array. Thus, the matrix M of modulation factors is therefore configured to control the electrical modulation signal applied to each pixel.

Each pixel is also configured to generate a concomitant electrical signal 206 upon modulation of incident light. This is due to the proportion of incident light that is not reflected and/or transmitted through the pixel which generates a current in the pixel. The current is therefore proportional to the light not reflected / transmitted as light 208.

The current generated at a pixel therefore in part depends on the modulation signal applied to said pixel. This is because the modulation signal controls the optical absorption of the pixel which therefore controls the proportion of incident light that is not reflected and/or transmitted through the pixel. Where incident light to a pixel is kept constant, the current is also inversely proportional to the modulated light which is reflected and/or transmitted by said pixel.

However, the current generated at a pixel also in part depends on the light incident to said pixel. For example, for a given modulation signal, increasing the intensity of incident light will increase the number of photons incident on the pixel and therefore increase the generated current for said pixel, despite the proportion of incident light that is not reflected and/or transmitted through the pixel remaining constant. As noted above, the current is proportional to the light not reflected / transmitted. It follows that, for a given modulation signal, the current is also proportional to the incident light delivered to the pixel, and the modulated light which is reflected and/or transmitted by said pixel.

The electrical signal output by the pixel can therefore provide an indication of the modulated light at said pixel.

For example, an indication of energy of the modulated light, such as the intensity of modulated light, may be calculated based on the generated current for said pixel. This may be achieved by mapping the generated current to an energy of modulated light based on the applied modulation signal, and/or comparison with calibration values, lookup tables, or other reference data for example. The power or energy of the modulated light may also be estimated by integrating the currents or magnitude of the currents for said pixel.

Each pixel of the spatial light modulator and detector 204 is therefore configured to act both as a light modulator and a photodetector. The system of Fig. 1 may advantageously provide a simple optical processing system. By providing a device configured to both modulate and detect light, the combined spatial light modulator and detector 204 reduces sensitivity to system alignment by eliminating the need for alignment between discrete spatial light modulator and photodetector elements. Additional photodetectors may not be required, in accordance with various embodiments of the invention.

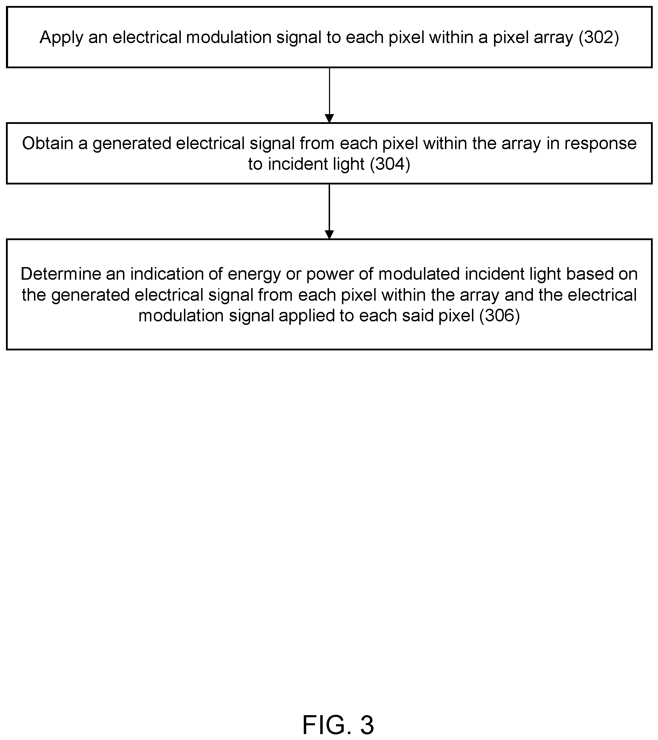

A method of spatial light modulation and detection for an optical data processing system is shown in Fig. 3. The method comprises applying an electrical modulation signal, such as a voltage, to each pixel within an array of pixels (302). Each pixel has a corresponding spatial location, and, in this example, comprises an electro-absorption modulator (EAM) configured to exhibit an electro-absorption effect. As such, applying the electrical modulation signal to a pixel is configured to vary the optical absorption properties of said pixel. The electrical modulation signals applied to the array may be controlled by a matrix of modulation factors, wherein each value in the matrix corresponds to a pixel in the array. Thus, the matrix of modulation factors is used to control the electrical modulation signal applied to each pixel.

The method further comprises obtaining a generated electrical signal from each pixel within the array in response to incident light (304). Incident light may be applied to the pixel array by optics 102. For example, the incident light applied to the array may be controlled based on a vector of light intensities, wherein each value in the vector may be applied to a row of pixels in the array. Each pixel is configured to modulate incident light by amplitude modulation and generate a concomitant electrical signal, such as a current. The generated electrical signal depends on incident light and the electrical modulation signal applied to said pixel. For example, each pixel may be configured to generate a current, wherein the generated current depends on the intensity of incident light applied to said pixel and the electrical modulation signal applied to said pixel. The generated current is proportional to the incident light that is not reflected and/or transmitted through the pixel. $modulated light output = incident light input - absorbed light$ $absorbed light ∝ generated current$

In more detail, the modulated light intensity output by a pixel is the product of the light intensity incident to said pixel and a modulation factor applied to said pixel, wherein the modulation factor represents the proportion of incident light to be reflected or transmitted by said pixel, dictated by an optical absorption coefficient of said pixel, as below. $modulated light output = incident light input \times modulation factor$

Thus, $generated current ∝ incident light input \left(1-modulation factor\right)$

When the applied modulation factor is held constant, the current generated by said pixel during modulation is generally proportional to the incident light intensity. This is to say, the greater the intensity of incident light, the greater the generated current for a given modulation factor.
*generated current* ∝ *incident light intensity* for a constant modulation factor.

The method may determine an indication of energy of modulated light based on the generated electrical signal from each pixel within the array, and the known electrical modulation signal applied to each said pixel (306). Preferably the indication of energy of modulated light is an indication of intensity of modulated light.

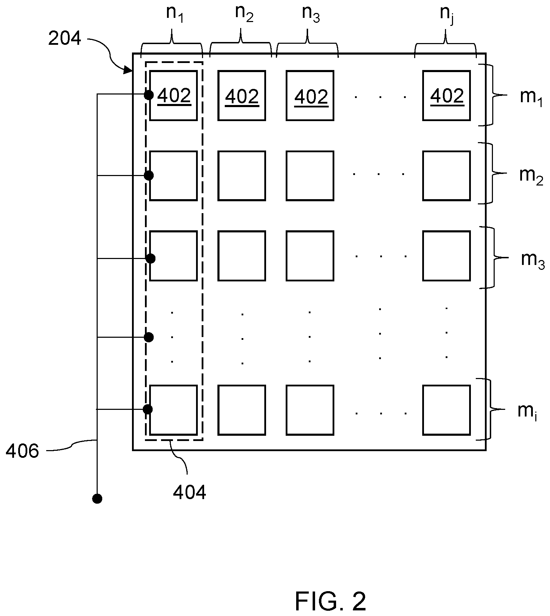

An example spatial light modulator and detector 204 is shown in more detail in Fig. 2. This may be used in the system of Fig. 1. The spatial light modulator and detector 204 comprises a two-dimensional, e.g., rectangular array of pixels 402. The pixels 402 are arranged in rows (m₁, m₂, m₃, ..., mᵢ) and columns (n₁, n₂, n₃, ..., nⱼ).

Each pixel comprises a material configured to exhibit an electro-absorption effect which may be any material in which there is a change in optical absorption with applied voltage and/or electric field, and generation of a concomitant electrical signal responsive to incident light. For example, the pixels may be semiconductors. One commercially available example of this is an electro-absorption modulator (EAM). Preferably, each pixel comprises a Quantum Confined Stark Effect (QCSE) EAM.

Each column defines one example of a set 404 of pixels 402, wherein pixels of a set 404 (e.g. pixels within a given column) are electrically coupled such that the generated electrical signals from pixels of said set 404 provide a combined electrical signal. The combined electrical signal is based on summing the generated currents for each pixel within the set 404. An example electrical coupling 406 is shown in Fig. 2 for a set 404 of pixels 402 located in column n₁. The skilled person will understand that each column (n₁, n₂, n₃, ..., nⱼ) may comprise said electrical couplings 404 between pixels 402 of said column, however these electrical couplings 404 have been omitted from Fig. 2 for clarity.

The electrical coupling 406 may further comprise circuitry (not shown) configured to compute the square amplitude of the generated current for each pixel, and e.g., an integrator. Since the value of the square of the amplitude is positive, the current values from other pixels within the set may constructively sum within the combined signal. The integrator may also ensure that the electrical signal is captured even if the electrical signals from pixels within the set are slightly out of phase.

The spatial light modulator and detector 204 is therefore configured to output a signal indicative of modulated light incident to the set 404 of pixels based on the combined signal from the set of pixels and the modulation signals applied to the pixels of said set.

Whilst the example shown in Fig. 2 defines a set 404 of pixels 402 based on pixels being arranged in a common column, the skilled person will understand that a set of pixels may alternatively be determined based on other relationships between pixels. For example, a set of pixels may alternatively be defined by pixels arranged in a common row, wherein said pixels within a row are electrically coupled to give rise to a combined electrical signal, however the skilled person will understand that this is not intended to be limiting. It is also envisaged that a set of pixels may comprise a plurality of rows or columns of the array. It will be understood that a set of pixels may be electrically coupled to give rise to a combined electrical signal according to other spatial relationships between pixels, for example wherein the electrical couplings may couple the pixels as desired for processing, akin to electrical couplings between components within a circuit board.

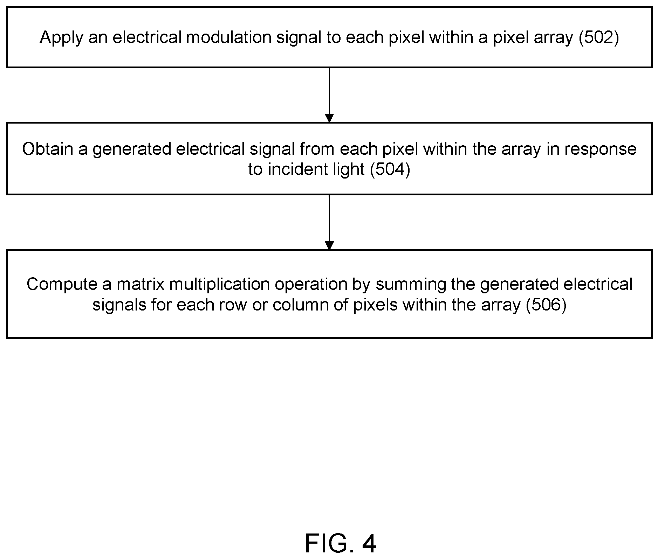

An example method of computing vector matrix multiplications based on an optical computing system is shown in Fig. 4.

The method comprises applying an electrical modulation signal, such as a voltage, to each pixel within an array of pixels (502). Each pixel has a corresponding spatial location, and comprises an electro-absorption modulator (EAM) configured to exhibit an electro-absorption effect. As such, applying the electrical modulation signal to a pixel is configured to vary the optical absorption properties of said pixel. By way of illustration, the array of pixels may be provided by the spatial light modulator and detector 204 shown in Fig. 2.

The electrical modulation signals applied to the array may be controlled by a matrix of modulation factors, wherein each value in the matrix corresponds to a pixel in the array. Thus, the matrix of modulation factors is used to control the electrical modulation signal applied to each pixel.

The method further comprises obtaining a generated electrical signal from each pixel within the array in response to incident light (504).

Incident light may be applied to the pixel array by optics 102. For example, the incident light applied to the array may be controlled based on a vector of light intensities, wherein each value in the vector corresponds to a row of pixels in the array.

Each pixel is configured to modulate incident light by amplitude modulation and generate a concomitant electrical signal, such as a current. The generated electrical signal depends on incident light and the electrical modulation signal applied to said pixel. For example, each pixel may be configured to generate a current, wherein the generated current depends on the intensity of incident light applied to said pixel and the electrical modulation signal applied to said pixel. The generated current is proportional to the incident light that is not reflected and/or transmitted through the pixel.

The method then comprises computing a matrix multiplication operation by summing the generated electrical signals, such as the generated currents, for each row or column of pixels within the array (506).

By way of illustration, the computing operation to be performed is a multiplication of vector v with matrix M to get output vector x. Assume: $vector v = \left[v\left(1\right)…v\left(N\right)\right]$ $matrix M = \left[m\left(i, j\right)\right] , where i = 1 … N \left(rows\right) and j = 1 … K \left(columns\right) .$

It follows that: $x = vM = {\left[x\left(1\right)…x\left(K\right)\right]}^{T}$

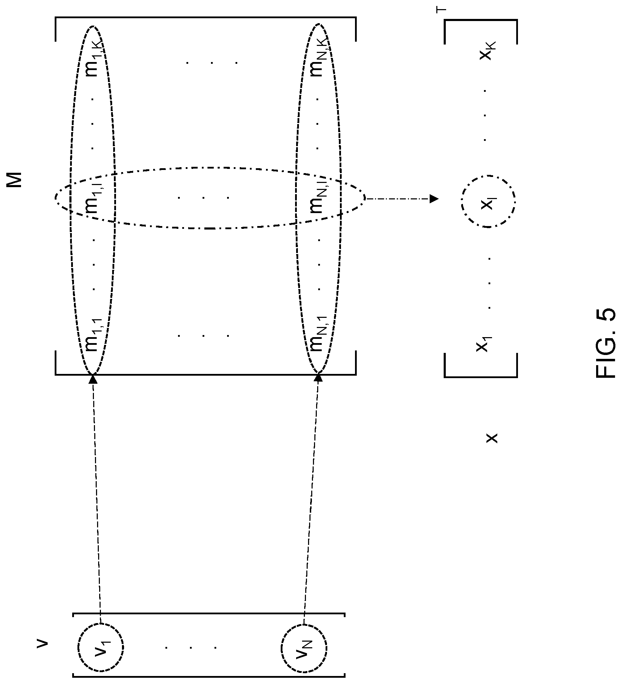

In the present case, the vector v is provided by the light input delivered to the array of pixels, for example as illustrated as optics 102. Each light source v(I) representing a vector element v(I) is projected onto a row (I) of pixels of the array. In other words, v(I) is projected onto elements [m(l,j)] for I constant and j = 1 ... K. This is illustrated in Fig. 5.

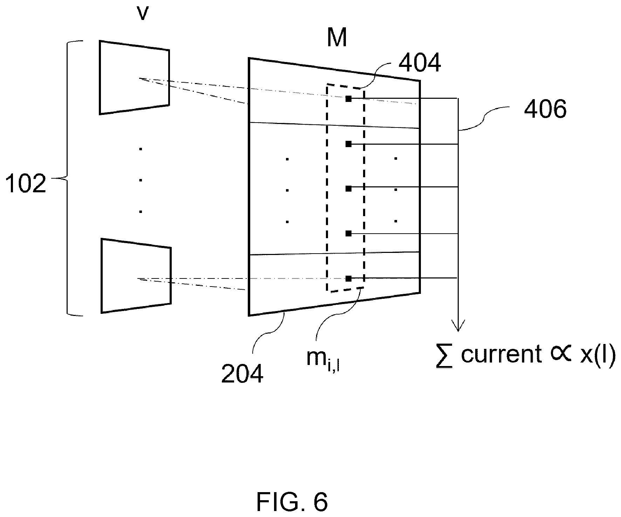

The spatial light modulator and detector 204 shown in Fig. 2 may be particularly advantageous for computing vector-matrix multiplications because the electrical couplings 406 between pixels of a common row or column facilitates electrical summing of generated electrical signals for said row or column, giving rise to a combined electrical signal representing the sum of each electrical signal generated by each pixel within said row or column. Such a summed signal may thus represent an element of the resulting vector x. For example, as shown in Fig. 6, the electrical coupling 406 gives rise to a combined electrical signal, in this case representing the summed currents generated for each pixel within column I. This combined electrical signal may then represent x(I) due to proportionality between the combined electrical signal and x(I). This eliminates the need for lenses and separate photodetectors after the spatial light modulator 204.

The skilled person will understand however that the method of Fig. 5 is not limited to the use of the spatial light modulator and detector 204 shown in Fig. 2 comprising the electrical couplings configured to give rise to the combined signal such that the summing is performed in the signal domain. Rather, the computing step 506 may alternatively be configured to be performed in a digital domain, for example by a processor configured to digitally sum output generated electrical signals for each pixel, such as indications of the generated currents, according to the row or column of said pixel within the array.

It is mentioned above that a set of the plurality of pixels may be electrically coupled such that the generated electrical signals from pixels of said set are combined to provide a combined signal. Accordingly, the device is configured to output a signal based on the combined signal. In some embodiments the device may be configured to provide an output signal based on the generated electrical signals from each pixel - in the sense of there being one signal per pixel. The signal may be an indication of the incident light at each pixel, such as an indication of energy of the incident light at each pixel. The signal may be an indication of the modulated light, such as an indication of energy of the modulated light output by the device at each pixel(e.g. the incident light as modulated by the device).

With reference to the drawings in general, it will be appreciated that schematic functional block diagrams are used to indicate functionality of systems and apparatus described herein. It will be appreciated however that the functionality need not be divided in this way and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

In the context of the present disclosure other examples and variations of the apparatus and methods described herein will be apparent to a person of skill in the art.

## Claims

1. A spatial light modulator and detector for an optical data processing system, comprising:
a plurality of pixels arranged in an array, wherein each pixel is configured to modulate incident light and comprises a material configured to generate an electrical signal indicative of incident light on the pixel, wherein the electrical signal depends at least in part on a modulation signal applied to each pixel for said modulation;
wherein a set of the plurality of pixels are electrically coupled such that the electrical signals generated by the pixels of said set provide a combined signal;
wherein the spatial light modulator and detector is configured to output at least one signal based on the combined signal.

2. The spatial light modulator and detector of claim 1 wherein the material is configured to exhibit an electro-absorption effect, for example wherein the electrical signal is generated in response to incident light.

3. The spatial light modulator and detector of any preceding claim, wherein the electrical signal generated by each pixel is an electrical current, optionally wherein pixels of said set are electrically coupled such that the generated electrical currents from said pixels of the set are configured to be summed, for example wherein said pixels of the set are electrically coupled in a star-connection topology.

4. The spatial light modulator and detector of claim 3, wherein the electrical coupling of pixels of the set is configured to phase-align the generated electrical current from said electrically coupled pixels.

5. The spatial light modulator and detector of any preceding claim, further comprising:
(i) circuitry configured to determine the magnitude of the generated electrical signal for each pixel, and wherein the set of pixels of the array are electrically coupled such that the determined magnitude of the generated electrical signals of said pixels are configured to be combined, for example wherein the circuitry is configured to determine the square of an amplitude of the generated electrical signal for each pixel, and wherein the set of pixels of the array are electrically coupled such that the determined square of the amplitude of the generated electrical signals of said pixels are configured to be combined; and/or
(ii) wherein the electrical coupling of the set of pixels further comprises circuitry comprising an integrator.

6. The spatial light modulator and detector of any preceding claim, wherein each pixel is configured to modulate incident light via amplitude modulation.

7. The spatial light modulator and detector of any preceding claim, wherein:
(i) the generated electrical signal depends on an energy of said incident light, for example the power of said incident light; and/or
(ii) the output signal indicative of modulated light comprises a signal indicative of an energy of the modulated light of the set of the plurality of pixels, for example the power of said modulated light.

8. The spatial light modulator and detector of any preceding claim, wherein the plurality of pixels comprises two or more sets of pixels; and wherein the spatial light modulator and detector is configured to output two or more signals, each signal based on the combined signal for one of the two or more sets of pixels.

9. The spatial light modulator and detector of any preceding claim wherein pixels of said set are located in a common line of the array of the plurality of pixels, such as a common row or column.

10. The spatial light modulator and detector of any preceding claim wherein the modulation signal applied at the array is configured to be controlled by a matrix of modulation factors, wherein each value in the matrix corresponds to a pixel in the array, optionally wherein the intensity of light incident on the array of pixels is configured to be controlled by a vector; and
wherein the at least one output signal is configured to be indicative of a vector-matrix multiplication, wherein each output signal comprises a sum of the generated electrical signals for one set of a plurality of sets of pixels to provide the combined signal for each said set of pixels, wherein each set of pixels comprises pixels in a common row or column of the array.

11. The spatial light modulator and detector of any preceding claim wherein any one of:
(i) each pixel comprises a semiconductor configured to exhibit an electro-absorption effect;
(ii) wherein each pixel comprises one or more quantum well structures; and/or
(iii) each pixel comprises an electro-absorption modulator configured to exhibit an electro-absorption effect.

12. An optical data processing system, comprising:
the spatial light modulator and detector of any preceding claim; and
optics configured to deliver incident light to the array of the plurality of pixels of the spatial light modulator and detector.

13. The optical data processing system of claim 12, wherein the optics comprises a vector light input configured to deliver a vector of light to the array of the plurality of pixels of the spatial light modulator and detector.

14. A method of spatial light modulation and detection for an optical data processing system, the method comprising:
applying an electrical modulation signal to each pixel within an array of a plurality of pixels, each pixel at a corresponding spatial location, and wherein each pixel comprises a material configured to exhibit an electro-absorption effect, each pixel configured to modulate incident light and to generate an electrical signal, wherein the generated electrical signal depends on incident light and the electrical modulation signal applied to said pixel;
obtaining a generated electrical signal from each pixel within the array in response to incident light; and
determining an indication of energy of the modulated light based on the generated electrical signal from each pixel within the array and the electrical modulation signal applied to each said pixel.

15. The method of claim 14, wherein determining the indication of energy of modulated light further comprises:
(i) performing a computation by operating on the generated electrical signal for two or more pixels within the array, based on the spatial location of said two or more pixels; and/or
(ii) summing the generated electrical signal from each pixel for a set of pixels within the array to determine an indication of intensity of modulated light incident to the set of pixels.
